# NEUE EUROPÄISCHE PATENTSCHRIFT

(11) **EP 0 566 841 B2**
(45) Veröffentlichungstag und Bekanntmachung des Hinweises auf die Entscheidung über den Einspruch: **12.12.2001**
(45) Hinweis auf die Patenterteilung: 26.03.1997
(21) Anmeldenummer: 93102604.1
(22) Anmeldetag: 19.02.1993
(51) Int. Cl.: B23B 31/12

(54) **Bohrfutter**
Drill chuck
Mandrin de perçage

(30) Priorität: 21.03.1992 DE 4209307
(43) Veröffentlichungstag der Anmeldung: 27.10.1993
(73) Patentinhaber: Josef Albrecht Bohrfutterfabrik GmbH + Co, 73249 Wernau (DE)
(72) Erfinder:
(74) Vertreter: Rüger, Rudolf, Dr.-Ing.

(56) Entgegenhaltungen:
- CH-A- 677 078
- DE-A- 3 443 186
- DE-A- 3 600 445
- DE-A- 3 644 707
- DE-C- 3 413 005
- US-A- 4 778 730
- DATABASE WPI Section PQ, Week 9120 Derwent Publications Ltd., London, GB; Class P54, AN 91-140682 & CH-A-677 078 ( HRIBOVSEK B) , 15.April 1991

## Beschreibung

Die Erfindung betrifft ein Bohrfutter gemäß dem Oberbegriff des Patentanspruchs 1 und wie aus dem Dokument DE-A-3504917 bekannt.

Bohrfutter dieser Art, die in der Regel als sogenannte Drei-Backenfutter ausgebildet sind, sind in der Praxis in einer Reihe von Ausführungsformen gebräuchlich. Sie können mit durch entsprechende Betätigung der Stellmittel fest einstellbarer Spannung oder selbst nachspannend ausgebildet sein. Beispiele hierfür sind in der EP 0054 774 B1, der FR-A-1198 531 sowie in der DE-C-588 386 und der DE-C-37 44 589 beschrieben. Auch Ausführungsformen mit lediglich zwei Spannbacken, die mit ihren Klemmflächen den Werkzeugschaft teilweise umgreifen, sind schon bekannt geworden (US-A-914 255). Bei diesen Bohrfuttern sind die Spannbacken durchweg aus Stahl hergestellt, wobei sie zumindest im Bereiche der Spannfläche gehärtet sind.

Mit diesen Spannfuttern ist eine präzise sichere Spannung von Werkzeugen mit Zylinderschaft, insbes. Bohrern, möglich. Beim Spannen erfährt der Werkzeugschaft unter der Einwirkung der an den in wesentlichen linien- oder streifenförmigen Spannflächen der Spannbacken auftretenden hohen Flächenpressung eine geringfügige elastische oder gegebenenfalls sogar plastische Verformung, die eine drehsichere lagefeste Verklemmung des Werkzeugschaftes mit den Spannbacken gewährleistet. Dies gilt jedoch nicht mehr bei den heute mehr und mehr zur Verwendung kommenden Vollhartmetallwerkzeugen, bspw. Vollhartmetallbohrern. Die Härte des glatten, mit Rücksicht auf die zu erzielende Präzision exakt zylindrischen Werkzeugschaftes dieser Werkzeuge ist so groß, daß unter der Einwirkung der Spannkraft, für die das Bohrfutter ausgelegt ist, eine hochbelastbare Spannung des Werkzeugschaftes nicht mehr gegeben ist. Die Folge davon ist, daß beim Auftreten von Belastungsspitzen die Gefahr besteht, daß der Werkzeugschaft gegenüber den Spannbacken kurzzeitig etwas durchrutscht. Dies führt aber rasch dazu, daß die Spannkraft nachläßt, weil die Spannbacken Schaden nehmen. Eine Erhöhung der Spannkraft, etwa durch stärkeres Anziehen der Stellmittel beim Einsetzen des Werkzeugschaftes, bringt deshalb keine Abhilfe, weil dann eine plastische Verformung der Spannbacken zu befürchten ist, die das Bohrfutter Unbrauchbar macht.

Insbesondere bei Schlagbohrmaschinen oder - hämmern ist es bekannt (DE-A-3 344 552, DE-A-3 504 917, DE-A-3 644 707), Drei-Backenfutter zu verwenden, deren Spannbacken aus Hartmetall bestehen oder Hartmetalleinsätze tragen (DE-A-35 04 917), die mit einer zur Futterachse parallelen scharfen Längsverzahnung versehen sind, deren Längszähne sich entweder unter Ausbildung von Längsrillen in den Schaut des Werkzeugs eindrücken oder mit einem an dem Werkzeugschaft vorgesehenen Längsrändel drehmomentübertragend zusammenwirken. Dies kommt für aus Vollhartmetall bestehende Bohrwerkzeuge nicht in Frage; die auch für die Verwendung in Schlagbohrmaschinen oder -hämmern nicht bestimmt sind. Daneben ist es bei Spannbacken für Schraubstöcke mit einem aus Metall insbesondere Stahl bestehenden Grundkörper (DE-A-3 929 857) und bei Werkzeugen, bspw. Schraubendreher und Schraubenschlüsseln (DE-A-4 778 730) bekannt, die dem Werkstück zugekehrte Spannfläche mit einer rauhen Oberfläche zu versehen, die von einer keramischen Beschichtung oder einer Beschichtung aus einer Hartmetallkörnung, einer Diamantkornung oder dergleichen gebildet ist. Bei einem Schraubstock bzw. bei Werkzeugen liegen aber andere Spannverhältnisse wie bei einem Bohrfutter vor, bei dem der zylindrische Werkzeugschaft an drei längs des Umfanges gleichmäßig verteilten linien- oder streifenförmigen Spannbereichen zur Drehachse des Bohrfutter genau zentriert gespannt werden muß. Insbesondere Bohrfutter für Vollhartmetallbohrer kleinen Durchmessers müssen aber durchweg mit höchster Präzision arbeiten.

Aufgabe der Erfindung ist es deshalb, ein Bohrfutter zu schaffen, das sich bei hoher Präzision und langer Lebensdauer auch für Werkzeuge mit einem Spannschaft aus Hartmetall oder einem entsprechenden Material großer Härte auszeichnet.

Zur Lösung dieser Aufgabe weist das Bohrfutter erfindungsgemäß durch die Merkmale des Patentanspruchs 1 auf. Die Spannbacken - oder an diesen angeordnete Spannteile - sind an den Spannflächen zumindest bereichsweise mit Diamantstaub Material beschichtet.

Bei einem Ausführungsbeispiel kann jeder Spannbacken wenigstens ein längliches Spannteil tragen, das mit seiner Längsachse in Spannbackenlängsrichtung verlaufend angeordent ist und damit eine ununterbrochene Spannfläche bildet. Alternativ kann jeder Spannbacken aber auch mehrere in Abständen hintereinander angeordnete längliche Spannelemente aufweisen, so daß sich entsprechende, voneinander getrennte Spannflächenbereiche ergeben.

Die Anordnung kann aber auch derart getroffen sein, daß jeder Spannbacken mit wenigstens einem Spannteil versehen ist, das quer zu der Spannbackenlängsrichtung verlaufend angeordnet ist. Diese Ausführungsform ist insbesondere dann von Vorteil, wenn es darauf ankommt, verhältnismäßig eng umgrenzte Bereiche erhöhter Verschleißfestigkeit zu schaffen.

Einfache konstruktive Verhältnisse ergeben sich, wenn bei den vorerwähnten Ausführungsformen das Spannteil eine im wesentlichen zylindrische Querschnittsgestalt aufweist. Dadurch läßt sich mit geringem Aufwand eine im wesentlichen linienförmige Berührung an den Spannstellen des Werkzeugschaftes mit entsprechend hoher Flächenpressung erzielen. Die Spannteile können aber auch mit einer im wesentlichen prismatischen Querschnittsgestalt oder einer anderen geeigneten Querschnittsgestalt ausgebildet sein. Vorzugsweise tragen sie im wesentlichen linien- oder streifenförmige Spannflächen.

Im übrigen können die Spannteile lösbar an den Spannbacken befestigt sein, um damit einen Austausch bei Beschädigung oder Abnützung zu ermöglichen. Sie können in Ausnehmungen der Spannbacken eingesetzt sein, die gleichzeitig eine formschlüssige Halterung bewirken. Kommt es auf eine solche Austauschbarkeit nicht an, so können sie an den Spannbacken auch angelötet sein.

Die Spannbacken und/oder die Spannteile sind zumindest im Bereiche der Spannfläche mit dem verschleißfesten Material Diamantstaub beschichtet. Eine solche Beschichtung kann auch auf aus Hartmetall oder Oxid-Keramik bestehenden Spannbacken und/oder Spannteilen aufgebracht sein, doch reicht es in der Regel aus, die Spannbacken und/oder Spannteile aus einem weicheren Material, bspw. Stahl oder einer Stahllegierung, herzustellen und sie sodann mit dem verschleißfesten Material Diamantstaub zu beschichten.

Die Beschichtung kann Titannitrid (TiN) und/oder Titancarbid (TiC) enthalten. Die Spannfläche ist zumindest bereichsweise mit Diamantstaub beschichtet, der in einem entsprechenden Trägermaterial eingebettat ist. Die Diamantkörner sind nämlich so hart, daß sie zu einer lokalen elastischen oder plastischen Verformung des Hartmetall-Werkzeugschafts führen und sich auch in ihrem Träger im Bereiche der Spannfläche, d.h. den Spannbacken oder das Spannteil eingraben, mit der Folge, daß eine sehr wirksame rutschsichere Verbindung zwischen den Spannbacken und dem Werkzeugschaft beim Spannen des Bohrfutters zustandekommt.

Gebräuchliche Hartmetallwerkzeuge bzw. die Schäfte solcher Werkzeuge haben in der Regel eine Härte von HV 1400 bis 1800 (Vickers-Härte). Um diese Werkzeuge sicher spannen zu können, müssen die Spannbacken oder die Spannteile an den Spannflächen entsprechend hart sein. Es weisen deshalb die Spannbacken oder die Spannteile in den Bereichen erhöhter Verschleißfestigkeit wenigstens stellenweise eine Härte von HV 1800 oder mehr auf.

In der Zeichnung sind Ausführungsbeispiele des Gegenstandes der Erfindung dargestellt. Es zeigen:
- Fig. 1: ein selbstspannendes Bohrfutter gemäß der Erfindung, in einer Seitenansicht, teilweise im axialen Schnitt,
- Fig. 2: das Bohrfutter nach Fig. 1, geschnitten längs der Linie II-II der Fig. 1, in einer Draufsicht, und
- Fig. 3 bis 10: vier verschiedene Ausführungsformen von Spannbacken des Bohrfutters nach Fig. 1, jeweils in einer Seitenansicht, gegebenenfalls teilweise ausgeschnitten und in einer Draufsicht.

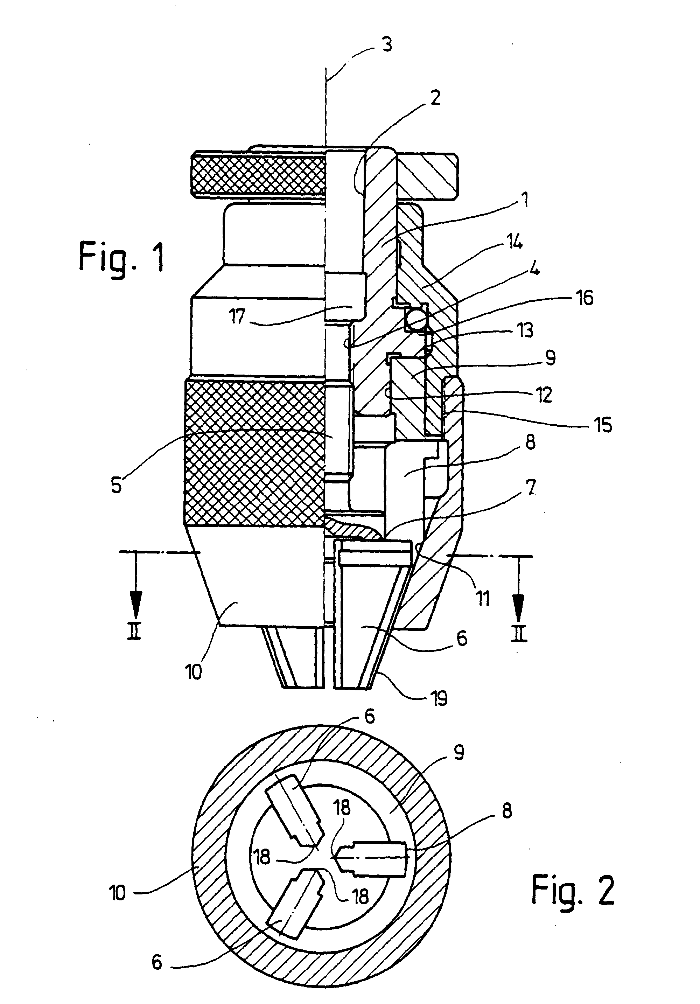

Das in den Fig. 1, 2 dargestellte 3-Backenbohrfutter ist ein sogenanntes selbstnachspannendes Bohrfutter. Es weist einen im wesentlichen zylindrischen Grundkörper 1 auf, der mit einem Innenkonus 2 zur Befestigung an einer entsprechenden Spindel ausgebildet ist. In eine zu der Drehachse 3 des Grundkörpers 1 koaxiale Gewindebohrung 4 des Grundkörpers 1 ist eine Druckspindel 5 eingeschraubt, auf der axial drei Spannbakken 6 abgestützt sind.

Die Spannbacken 6 sind endseitig bei 7 drehfest und radial verschieblich mit der Druckspindel 5 gekuppelt; sie sind in entsprechende Führungsnuten 8 eines Backenträgers 9 gelagert, welcher von einer Verschlußhülse 10 umgeben ist, die über eine Innenkonusfläche 11 in an sich bekannter Weise radial mit den Spannbakken 6 zusammenwirkt.

Der Backenträger 9 ist auf einer Zylinderfläche 12 des Grundkörpers 1 verdrehbar gelagert und axial gegen eine an dem Grundkörper 1 angeformte Ringschulter 13 abgestützt. Auf ihn ist endseitig eine zu der Drehachse 3 koaxiale Hülse 14 mit enger Passung aufgeschoben, die mit dem Backenträger 9 drehfest verstiftet ist. Auf ein Außengewinde 15 der Hülse 14 ist die Verschlußhülse 10 aufgeschraubt. Schließlich sind zwischen der Hülse 14 und einer zweiten Ringschulter 16 des Grundkörpers 1 Wälzkörper 17 angeordnet, die über die Ringschulter 16 die Hülse 14 und den Backenträger 8 an dem Grundkörper 1 in Achsrichtung abstützen.

Die drei Spannbacken 6 tragen auf ihrer der Drehachse 3 zugewandten geraden Innen- oder Spannseite jeweils eine Spannfläche 18, die exakt parallel zu der Drehachse 3 ausgerichtet ist. Sie ist derart gestaltet, daß sich beim Spannen eine im wesentlichen linien- oder streifenförmige Berührung mit dem in der Zeichnung nicht weiter dargestellten Schaft des zu spannenden Werkzeuges und damit eine hohe Flächenpressung in diesem Spannbereich ergibt.

Zum Spannen eines Werkzeuges wird dieses mit seinem Schaft zwischen die in einer geöffneten Stellung (Fig. 2) stehenden Spannbacken 6 eingeschoben. Beim anschließenden Verdrehen der Verschlußhülse 10 im Schließsinne werden der Backenträger 8, die Spannbacken 6 und die Druckspindel 5 mitgedreht. Dabei wird die Druckspindel 5 in zunehmendem Maße aus der Gewindebohrung 6 herausgeschraubt, mit der Folge, daß die im wesentlichen dreieckigen Spannbacken 6 auf ihrer äußeren schrägen Kegelfläche 19 längs der innenkonusfläche 11 der Verschlußhülse 10 nach unten geschoben (Fig. 1) und damit gleichmäßig radial nach innen verstellt werden.

Bei Belastung des so gespannten Werkzeuges im Betrieb kann dieses über die mit seinem Schaft gekuppelten Spannbacken 6 die Druckspindel 5 noch etwas weiter gegenüber dem angetriebenen Grundkörper 1 verdrehen, so daß ein selbsttätiger Nachspanneffekt zustandekommt.

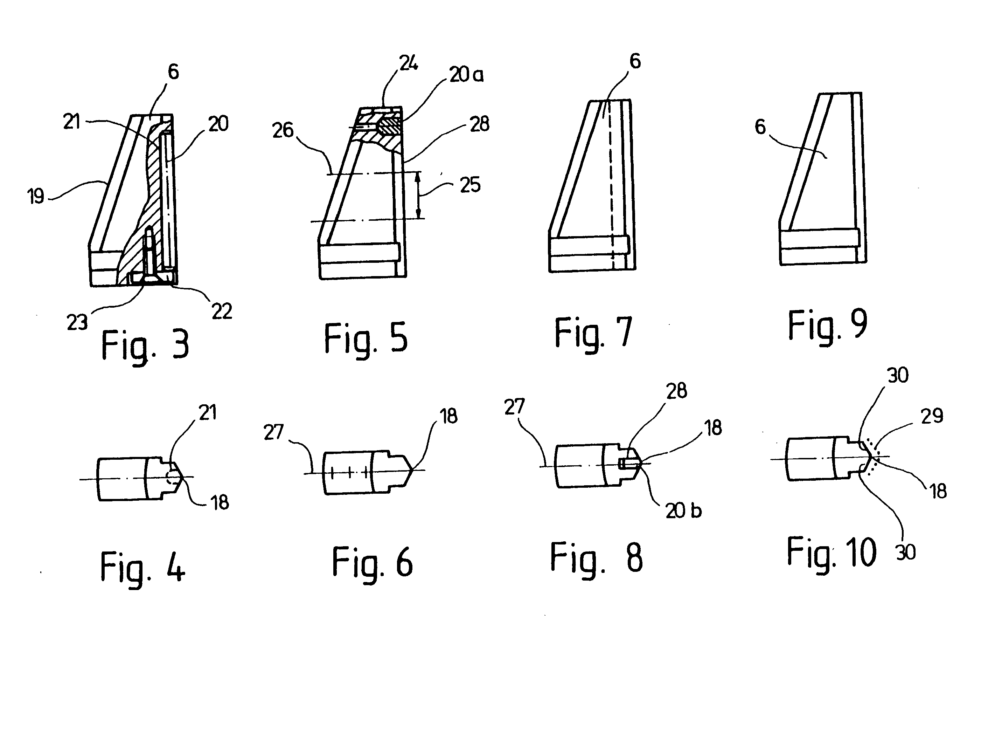

Um dieses Bohrfutter zum Spannen von Werkzeugen sicher einsetzen zu können, die einen aus einem sehr harten Material, bspw. Hartmetall, bestehenden Werkzeugspannschaft aufweisen, sind die Spannbakken 6 in besonderer Weise ausgebildet, die im folgenden anhand der Fig. 3 bis 10 erläutert werden sollen:

Bei allen diesen Ausführungsformen ist die Anordnung derart getroffen, daß die Spannbacken 6 an den Spannflächen 18 zumindest bereichsweise mit einer gegenüber gehärtetem Stahl erhöhten Verschleißfestigkeit ausgebildet sind indem eine Diamantstaubbeschichtung aufgebracht ist. Sie weisen zu diesem Zwecke in den Bereichen erhöhter Verschleißfestigkeit wenigstens stellenweise eine Härte von HV 1800 oder mehr auf.

Bei den Ausführungsformen nach den Fig. 3 bis 8 ist jeder der Spannbacken 6 auf seiner der Drehachse 3 (Fig. 1) zugewandten geraden Spannseite mit wenigstens einem die Spannfläche 18 tragenden Spannteil versehen, das an dem Spannbacken 6 befestigt ist und mit Diamantstaub beschichtet ist, das eine im Vergleich zu dem Material des Spannbackens 6 (in der Regel Stahl) erhöhte Verschleißfestigkeit aufweist.

Zu diesem Zwecke ist bei den Spannbacken entsprechend der Ausführungsform nach den Fig. 3,4 jeweils ein längliches Spannteil 20 in Gestalt eines Zylinderstiftes aus Hartmetall verwendet, der in einer entsprechenden zu der Drehachse 3 hin über ihre Länge schlitzartig geöffnete Axialbohrung 21 des Spannbackens 6 aufgenommen ist. Die Axialbohrung 21 ist eine Sackbohrung. Sie ist auf der Stirnseite des Spannbackens 6 durch ein Verschlußplättchen 22 verschlossen, das den Zylinderstift axial fixiert und an dem Spannbacken 6 mittels einer Kreuzschlitzschraube 23 befestigt ist.

Die Spannfläche 18 ist an dem aus der Axialbohrung 21 seitlich vortretenden freiliegenden Teil des Zylinderstiftes 20 ausgebildet. Sie ergibt mit dem zylindrischen Schaft des zu spannenden Werkzeuges eine (theoretische) Linienberührung und damit eine hohe Flächenpressung in dem Spannbereich.

Während bei der Ausführungsform nach den Fig. 3,4 ein über die axiale Länge der Spannfläche 18 durchgehendes zylindrisches Spannelement 20 vorgesehen ist, das somit mit seiner Längsachse in Spannbackenlängsrichtung verlaufend angeordnet ist, ist bei der zweiten Ausführungsform nach den Fig. 5,6 die Anordnung derart getroffen, daß jeder Spannbacken mehrere in Abständen hintereinander angeordnete längliche Spannelemente 20a aufweist. Die Spannelemente 20a sind jeweils durch kleine Zylinderstifte aus Hartmetall gebildet, die in entsprechende, von der geraden Spannseite der Spannbacken ausgehende Sackbohrungen 24 eingesetzt sind. Die Sackbohrungen 24 sind bei dem dargestellten Ausführungsbeispiel in gleichen bei 25 angedeuteten Achsabständen mit ihren Achsen 26 in einer gemeinsamen Mittelebene 27 (Fig. 6) des jeweiligen Spannbackens 6 liegend angeordnet. Jedes Spannelement 20a trägt auf seiner aus der Sackbohrung 24 vorragenden Stirnseite eine dach- oder kegelförmig gestaltete Spannfläche 18. Die Spannflächen 18 der Spannelemente 20a können über dazwischenliegende Fiächenbereiche 28 (Fig. 5) vorragen, doch ist es in der Regel vorzuziehen, die Spannbacken 6 auf ihrer der Drehachse 3 zugewandten Vorderseite durchgehend prismatisch zu gestalten, so daß auch die in der Regel aus einem weicheren Material bestehenden Flächenbereiche 28 als Teile der jeweiligen Spannfläche 18 wirken.

Die Spannelemente 20 sind in ihre Sackbohrungen 24 eingepreßt und dort erforderlichenfalls noch zusätzlich durch Verkleben oder Verlöten gesichert.

Bei der dritten Ausführungsform nach den Fig. 7, 8 ist jeder Spannbacken 6 auf seiner der Drehachse 3 zugewandten Spannseite mit einer über die axiale Länge durchgehenden, symmetrisch zu der Mittelebene 27 angeordneten Nut 28 versehen, in die ein durchgehendes Spannelement 20b in Gestalt einer Hartmetalleiste eingesetzt ist, die in der Nut 28 hartverlötet ist. Die Hartmetalleiste ist auf ihrer aus der Nut 28 vorragenden Längsseite prismatisch mit zwei sich unter einem Winkel von etwa 120° schneidenden Flächen gestaltet, die die streifenförmige Spannfläche 18 tragen.

Bei den beschriebenen Ausführungsformen der Spannbacken 6 sind die Spannteile 20, 20a, 20b bzw. bei der Ausführungsform nach den Fig. 9, 10 die Spannbacken 6 insgesamt, wie erwähnt, aus einem Material hergestellt, dessen Härte mindestens so groß wie die Härte des zu spannenden Werkzeugschaftes ist. Zusätzlich können diese Spannteile 20, 20a, 20b bzw. die ganzen Spannbacken nach Fig. 9, 10 noch mit einer Verschleißschutzschicht, insbesondere aus Titannitrid oder Titancarbid (TiN oder TiC) versehen werden. Es sind auch Ausführungsformen denkbar, bei denen die Spannteile 20, 20a, 20b und die Spannbacken 6 nach Fig. 9,10 aus einem weicheren Material, bspw. einem legierten Stahl, bestehen und zumindest im Bereiche der Spannfläche 18 wenigstens bereichsweise mit der erwähnten Beschichtung versehen sind.

Eine besonders wirksame Spannung von sehr harten, bspw. aus Hartmetall bestehenden Werkzeugschäften läßt sich schließlich mit einer weiteren Ausführungsform der Spannbacken 6 erzielen, die in den Fig. 9,10 schematisch angedeutet ist. Die insgesamt aus Hartmetall bestehenden Spannbacken 6 sind auf ihrer der Drehachse 3 zugewandten Spannseite mit einer Diamantbeschichtung 29 versehen. Diese Diamantbeschichtung 29 besteht aus Diamantstaub, der in einem entsprechenden Bindemittel aus Kunstharz auf die die Spannfläche 18 definierenden, einander unter einem Winkel von etwa 120° schneidenden durchgehenden Flächenbereich 30 des jeweiligen Spannbackens 6 dauerhaft aufgebracht ist, derart, daß die Spannfläche 18 auf der Diamantstaubbeschichtung 29 liegt.

Die Spannbacken selbst sind bei diesem Ausführungsbeispiel in der Regel aus Stahl hergestellt. Es ist aber auch denkbar, die Diamantstaubbeschichtung 29 auf speziellen Trägerelementen anzuordnen, die dann, ähnlich wie in den Fig. 3 bis 8, die Spannelemente 20, 20a, 20b mit den Spannbacken losbar oder unlösbar verbunden sind.

## Patentansprüche

1. Bohrfutter mit einem zur Befestigung an einer Spindel oder dergl. eingerichteten Grundkörper (1) durch den eine Drehachse (3) definiert ist,
- mit an dem Grundkörper (1) über einen Bakkenträger (9) geführten, radial verstellbaren Spannbacken zum Spannen eines zwischen sie eingefügten Schaftes eines Werkzeuges,
- wobei jeder der Spannbacken oder wenigstens ein mit diesem verbundenes Spannteil (20,20a,20b) zumindest eine mit dem Schaft des zu spannenden Werkzeuges in Eingriff bringbare Spannfläche (18) aufweist,
- mit an dem Grundkörper (1) gelagerten Stellmitteln (5,10) für die Spannbacken (6),
- wobei die Spannflächen an den Spannbacken (6) oder den mit diesen verbundenen Spannteilen (20,20a,20b) exakt parallel zu der Drehachse (3) ausgerichtet sind und eine beim Spannen des Schaftes des Werkzeuges eine im wesentlichen linien- oder streifenförmige Berührung mit dem Schaft ergebende Gestalt aufweisen,
**dadurch gekennzeichnet, daß** die Spannbacken (6) oder die mit diesen verbundenen Spannteile (20, 20a, 20b) zumindest im Bereich ihrer jeweiligen Spannfläche (18) mit einer gegenüber gehärtetem Stahl verschleißfesteren Beschiditung (29) versehen sind, die Diamantstaub enthält.

2. Bohrfutter nach Anspruch 1, **dadurch gekennzeichnet, daß** jeder Spannbacken (6) wenigstens ein längliches Spannteil (20, 20b) aufweist, das mit seiner Längsachse in Spannbackenlängsrichtung verlaufend angeordnet ist.

3. Bohrfutter nach Anspruch 1, **dadurch gekennzeichnet, daß** jeder Spannbacken (6) mehrere in Abständen hintereinander angeordnete längliche Spannteile (20, 20a, 20b) aufweist.

4. Bohrfutter nach Anspruch 1, **dadurch gekennzeichnet, daß** jeder Spannbacken (6) mehrere Spannteile (20a) aufweist, die quer zu der Spannbackenlängsrichtung verlaufend angeordnet sind.

5. Bohrfutter nach einem der vorhergehenden Ansprüche, **dadurch gekennzeichnet, daß** die Spannteile (20,20a) eine im wesentlichen zylindrische Querschnittsgestalt aufweisen.

6. Bohrfutter nach einem der Ansprüche 1 bis 4, **dadurch gekennzeichnet, daß** die Spannteile (20b) eine im wesentlichen prismatische Querschnittsgestalt aufweisen.

7. Bohrfutter nach einem der vorhergehenden Ansprüche, **dadurch gekennzeichnet, daß** die Spannteile (20,20a, 20b) in Ausnehmungen (21,24,28) der Spannbacken (6) eingesetzt sind.

8. Bohrfutter nach einem der vorhergehenden Ansprüche, **dadurch gekennzeichnet, daß** die Spannteile (20) lösbar an den Spannbacken (6) befestigt sind.

9. Bohrfutter nach einem der Ansprüche 1 bis 7, **dadurch gekennzeichnet, daß** die Spannteile (20a,20b) an den spannbacken (6) angelötet sind.

10. Bohrfutter nach Anspruch 1, **dadurch gekennzeichnet, daß** die Beschichtung Titannitrid (TiN) und/oder Titancarbid (TiC) enthält.

11. Bohrfutter nach einem der vorhergehenden Ansprüche, **dadurch gekennzeichnet, daß** die Spannbacken (6) und/oder die Spannteile (20,20a,20b) in den beschichteten Bereichen erhöhter Verschleißfestigkeit wenigstens stellenweise eine Härte von HV 1800 oder mehr aufweisen.

## Claims

1. A drill chuck with a base member (1) which is adapted for mounting on a spindle or the like and which defines an axis of rotation (3),
- with radially adjustable clamping jaws which are guided on the base member (1) via a jaw carrier (9) and which are intended to clamp the shank of a tool inserted between them,
- wherein each of the clamping jaws or at least one clamping member (20,20a,20b) connected thereto has at least one clamping surface (18) which can be brought into engagement with the shank of the tool to be clamped,
- with adjusting means (5,10) for the clamping jaws (6) mounted on the base member (1),
- wherein the clamping surfaces on the clamping jaws (6) or the clamping members (20,20a,20b) connected therewith are aligned exactly parallel to the axis of rotation (3), and are of a configuration which provides a substantially linear or strip-like contact with the shank when the tool shank is being clamped,
**characterised in that** at least in the vicinity of their respective clamping surface (18) the clamping jaws (6) or the clamping members (20,20a,20b) connected therewith are provided with a coating (29) which is more wear-resistant than hardened steel and which contains diamond dust.

2. A drill chuck according to Claim 1, **characterised in that** each clamping jaw (6) has at least one elongate clamping members (20,20a,20b) which has its longitudinal axis arranged to extend in the longitudinal direction of the clamping jaws.

3. A drill chuck according to Claim 1, **characterised in that** each clamping jaw (6) has a plurality of elongate clamping members (20,20a,20b) disposed one behind the other and spaced apart.

4. A drill chuck according to Claim 1, **characterised in that** each clamping jaw (6) has a plurality of clamping members (20a) which are arranged to extend transversely to the longitudinal direction of the clamping jaws.

5. A drill chuck according to any one of the preceding Claims, **characterised in that** the clamping members (20,20a) are of substantially cylindrical cross-sectional configuration.

6. A drill chuck according to any one of Claims 1 to 4, **characterised in that** the clamping members (20b) are of substantially prismatic cross-sectional configuration.

7. A drill chuck according to any one of the preceding Claims, **characterised in that** the clamping members (20,20a, 20b) are inserted in recesses (21,24,28) of the clamping jaws (6).

8. A drill chuck according to any one of the preceding Claims, **characterised in that** the clamping members (20) are secured releasably to the clamping jaws 6).

9. A drill chuck according to any one of Claims 1 to 7, **characterised in that** the clamping members (20a,20b) are soldered to the clamping jaws (6).

10. A drill chuck according to Claim 1, **characterised in that** the coating contains titanium nitride (TiN) and/or titanium carbide (TiC).

11. A drill chuck according to any one of the preceding Claims, **characterised in that** in the coated areas with increased wear resistance the clamping jaws (6) and/or the clamping members (20,20a,20b) have at least in places a hardness of HV 1800 or more.

## Revendications

1. Mandrin de perçage avec un corps (1) de mandrin qui est agencé en vue de sa fixation sur une broche ou similaire et qui définit un axe de rotation (3),
- avec des mors qui sont guidés sur le corps (1) par l'intermédiaire d'un guide (9) et sont réglables radialement aux fins de serrer la queue d'un outil insérée entre ceux-ci,
- chaque mors ou au moins un élément de serrage (20, 20a, 20b) lié à celui-ci, comportant au moins une surface de serrage (18) qui peut être amenée en prise avec la queue de l'outil à serrer,
- avec des moyens de réglage (5, 10) des mors de serrage (6), qui sont montés sur le corps (1),
- les surfaces de serrage sur les mors (6) ou sur les éléments de serrage (20, 20a, 20b) liés à ceux-ci étant parfaitement parallèles à l'axe de rotation (3) et ayant une forme qui, lors du serrage de la queue de l'outil, engendre un contact essentiellement suivant une ligne ou une bande avec la queue,
**caractérisé par le fait que** les mors (6) ou les éléments de serrage (20, 20a, 20b) liés à ceux-ci, au moins dans la zone de leur surface de serrage (18), sont pourvus d'un revêtement (29) dont la résistance à l'usure est supérieure à celle de l'acier trempé, qui contient de la poudre de diamant.

2. Mandrin de perçage selon la revendication 1, **caractérisé par le fait que** chaque mors (6) comporte au moins un élément de serrage (20, 20b) allongé, dont l'axe longitudinal est orienté dans la direction longitudinale du mors.

3. Mandrin de perçage selon la revendication 1, **caractérisé par le fait que** chaque mors de serrage (6) comporte plusieurs éléments de serrage (20, 20a, 20b) qui sont disposés les uns à la suite des autres, à distance les uns des autres.

4. Mandrin de perçage selon la revendication 1, **caractérisé par le fait que** chaque mors (6) comporte plusieurs éléments de serrage (20a) qui sont disposés transversalement à la direction longitudinale du mors.

5. Mandrin de perçage selon l'une des revendications précédentes, **caractérisé par le fait que** les éléments de serrage (20, 20a) ont, en section transversale, une forme sensiblement cylindrique.

6. Mandrin de perçage selon l'une des revendications 1 à 4, **caractérisé par le fait que** les éléments de serrage (20b) ont, en section transversale, sensiblement une forme de prisme.

7. Mandrin de perçage selon l'une des revendications précédentes, **caractérisé par le fait que** les éléments de serrage (20, 20a, 20b) sont logés dans des évidements (21, 24, 28) des mors (6).

8. Mandrin de perçage selon l'une des revendications précédentes, **caractérisé par le fait que** les éléments de serrage (20) sont fixés de manière démontable sur les mors (6).

9. Mandrin de perçage selon l'une des revendications 1 à 7, **caractérisé par le fait que** les éléments de serrage (20a, 20b) sont brasés sur les mors (6).

10. Mandrin de perçage selon la revendication 1, **caractérisé par le fait que** le revêtement contient du nitrure de titane (TiN) et/ou du carbure de titane (TiC).

11. Mandrin de perçage selon l'une des revendications précédentes, **caractérisé par le fait que** les mors (6) et/ou les éléments de serrage (20, 20a, 20b), au moins dans les zones revêtues présentant une plus grande résistance à l'usure, présentent au moins localement une dureté de HV 1800 ou plus.
